# EUROPÄISCHE PATENTANMELDUNG

(11) **EP 1 544 237 A2**
(43) Veröffentlichungstag der Anmeldung: **22.06.2005**
(21) Anmeldenummer: 04028904.3
(22) Anmeldetag: 07.12.2004
(51) Int. Cl.: C08K 5/00, C08L 67/02, C08L 77/00

(54) **Flammschutzmittel-Stabilisator-Kombination für Polyester und Polyamide**

(30) Priorität: 19.12.2003 DE 10359816
(71) Anmelder: Clariant GmbH, 65929 Frankfurt am Main (DE)
(72) Erfinder: Schlosser, Elke, Dl., 86163 Augsburg (DE); Deger, Hans-Matthias, Dr., 65719 Hofheim (DE); Hörold, Sebastian, Dr., 86420 Diedorf (DE)
(74) Vertreter: Mikulecky, Klaus, Dr.

(57) **Zusammenfassung**

Die Erfindung betrifft eine Flammschutzmittel-Stabilisator-Kombination für thermoplastische Polymere, die als Komponente A ein Phosphinsäuresalz der Formel (I) und/oder ein Diphosphinsäuresalz der Formel (II) und/oder deren Polymere enthält, 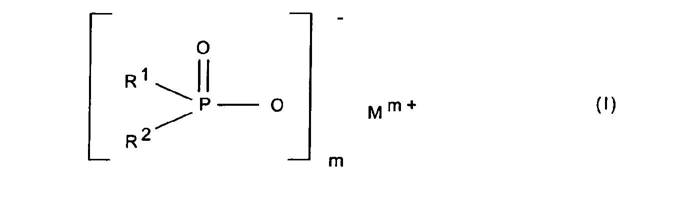 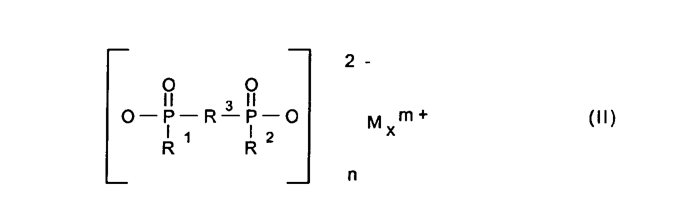 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Fe, Zr, Ce, Bi, Sr, Mn, Li, Na, K und/oder eine protonierte Stickstoffbase;
- m: 1 bis 4; n 1 bis 4; x 1 bis 4 bedeuten,
und als Komponente B mindestens einen Kettenverlängerer folgender Verbindungsklassen
b1) Bislactame,
b2) Bisoxazoline oder Bisoxazine und/oder
b3) Epoxiden
b4) Anhydride mehrwertiger Carbonsäuren.

## Beschreibung

Die Erfindung betrifft eine Flammschutzmittel-Stabilisator-Kombination für Polyester und Polyamide.

Für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders wirksam beschrieben worden und beeinträchtigen die Materialeigenschaften der Polymerformmassen weniger als z. B. die Alkalimetallsalze (EP-A-0 699 708).

Darüber hinaus wurden synergistische Kombinationen von Phosphinaten mit verschiedenen stickstoffhaltigen Verbindungen gefunden, die in einer ganzen Reihe von Polymeren als Flammschutzmittel effektiver wirken, als die Phosphinate allein (WO 97/39053, DE-A-197 34 437, DE-A-197 37 727 und US 6,255,371B1).

Werden die Phosphinate alleine oder in Kombination mit anderen Flammschutzmitteln in Polyestern oder Polyamiden eingesetzt, kommt es in der Regel zu einem gewissen Polymerabbau, der sich negativ auf die mechanischen Eigenschaften auswirkt.

Aus der Literatur sind Zusatzstoffe für Polyester und Polyamide bekannt, die einem durch Hydrolyse und thermische Belastung während der Verarbeitung hervorgerufenen Polymerabbau durch Kettenverlängerung entgegenwirken. Diese Zusatzstoffe sind als Kettenverlängerer bekannt und ermöglichen es, hochmolekulare Polyamide oder Polyester herzustellen.

Es wurde nun überraschenderweise gefunden, dass die genannten Kettenverlängerer in Flammschutzmittelkombinationen basierend auf Phosphinaten eingesetzt werden können, ohne dass die Flammschutzwirkung beeinträchtigt wird und mit dem Vorteil, dass der durch die Phosphinate hervorgerufene Polymerabbau verhindert wird.

Gegenstand der Erfindung ist somit eine Flammschutzmittel-Stabilisator-Kombination für Polyester und Polyamide, die als Komponente A ein Phosphinsäuresalz der Formel (I) und/oder ein-Diphosphinsäuresalz der Formel (II) und/oder deren Polymere enthält, 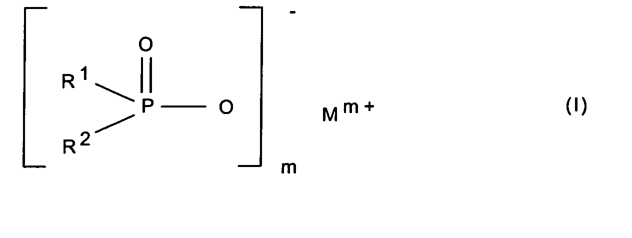 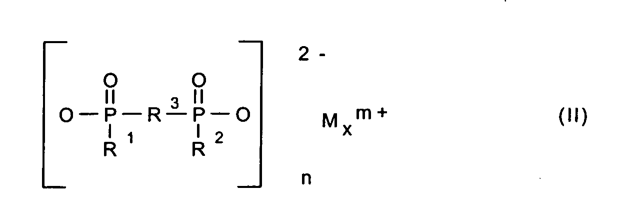 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Fe, Zr, Ce, Bi, Sr, Mn, Li, Na, K und/oder eine protonierte Stickstoffbase; bevorzugt Calcium-, Magnesium-, Aluminium - und/oder Zink-Ionen,
- m: 1 bis 4; n 1 bis 4; x 1 bis 4, bevorzugt m 2 oder 3; n 1 oder 3; x 1 oder 2
bedeuten
und als Komponente B mindestens einen Kettenverlängerer folgender Verbindungsklassen
b1) Bislactame,
b2) Bisoxazoline oder Bisoxazine und/oder
b3) Epoxiden,
b4) Anhydride mehrwertiger Carbonsäuren
enthält.

Bevorzugt bedeutet M Magnesium, Calcium, Aluminium oder Zink, besonders bevorzugt Aluminium oder Zink;

Bevorzugt sind R¹, R² gleich oder verschieden und bedeuten C₁-C₆-Alkyl, linear oder verzweigt und/oder Phenyl.

Bevorzugt sind R¹, R² gleich oder verschieden sind bedeuten und Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Bevorzugt handelt es sich bei der Komponente B um Bis-N-acyllactame der Formel 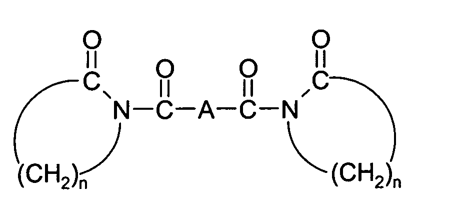 mit A = Alkyl oder eine aromatische Gruppe und n = 3 bis 11.

Bevorzugt handelt es sich bei der Komponente B um N, N'-isophthaloyl-bis-2-caprolactam, N,N'-adipoyl-bis-ε-caprolactam, N,N'-terephthaloyl-bis-laurolactam oder N,N'-isophthaloyl-bisbutyrolactam.

Bevorzugt handelt es sich bei der Komponente B um Carbonylbislactame der Formel 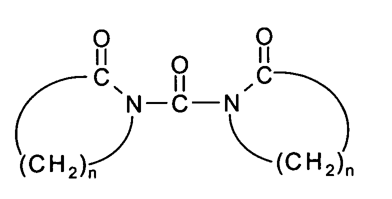 mit n = 3 bis 15.

Bevorzugt handelt es sich bei der Komponente B um N,N'-carbonylbiscaprolactam.

Bevorzugt handelt es sich bei der Komponente B um Bisoxazoline oder Bisoxazine der allgemeinen Formel 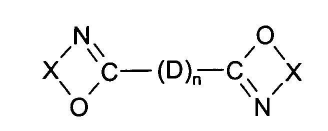 wobei X = eine bivalente Gruppe ist und wobei es sich bei X um einen 5er-Ring oder 6er-Ring für Bisoxazoline bzw. Bisoxazine handelt, und wobei D eine bivalente organische Gruppe, wie eine Alkylen-, Arylen-, Cycloalkylen- oder eine Aralkylengruppe und n 0 oder 1 ist.

Bevorzugt handelt es sich bei den Anhydriden mehrwertiger Carbonsäuren um niedermolekulare Bisanhydride und/oder um mit Maleinsäureanhydrid gepfropfte Polymere.

Bevorzugt handelt es sich bei X um eine Ethylengruppe, eine substituierte Ethylengruppe, eine Trimethylen- oder eine substituierte Trimethylengruppe.

Bevorzugt werden die Ethylengruppe und/oder Trimethylengruppe mit Methyl-, Ethyl-, Hexyl-, Alkylhexyl-, Nonyl-, Phenyl-, Naphthyl-, Diphenyl- oder Cyclohexylgruppen substituiert.

Bevorzugt handelt es sich bei den Bisoxazolinen und Bisoxazinen um 2,2'-bis(2-oxazolin), 2,2'-bis(4-methy)-2-oxazolin), 2,2'-bis(4-phenyl-2-oxazolin), 2,2'-bis(4-hexyloxazolin), 2,2'-p oder m-phenylen-bis(2-oxazolin), 2,2'-tetramethylen-bis(4,4'dimethyl-2-oxazolin) und entsprechende Oxazine.

Bevorzugt enthält die erfindungsgemäße Flammschutzmittel-Stabilisator-Kombination als weitere Komponente C Melaminphosphat, Dimelaminphosphat, Melaminpyrophosphat, Melaminpolyphosphate, Melampolyphosphate, Melempolyphosphate und/oder Melonpolyphosphate.

Bevorzugt enthält die erfindungsgemäße Flammschutzmittel-Stabilisator-Kombination als weitere Komponente C Melaminkondensationsprodukte wie Melam, Melem und/oder Melon.

Bevorzugt enthält die erfindungsgemäße Flammschutzmittel-Stabilisator-Kombination als weitere Komponente C oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin.

Bevorzugt enthält die erfindungsgemäße Flammschutzmittel-Stabilisator-Kombination als weitere Komponente C stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt enthält die erfindungsgemäße Flammschutzmittel-Stabilisator-Kombination als weitere Komponente C Stickstoffverbindungen der Formeln (III) bis (VIII) oder Gemische davon 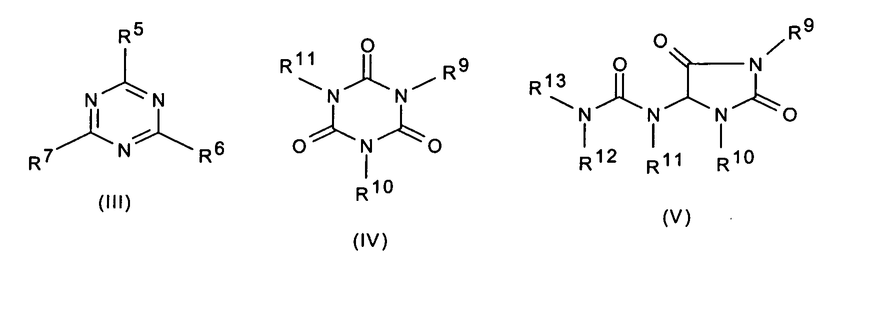 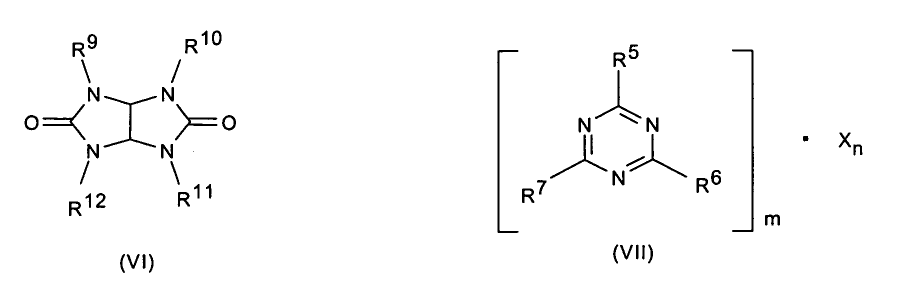 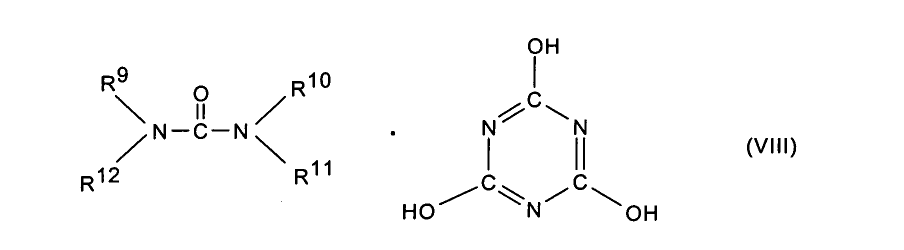 worin
- R⁵ bis R⁷: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Bevorzugt enthält die erfindungsgemäße Flammschutzmittel-Stabilisator-Kombination weiterhin als Komponente D eine synthetische anorganische Verbindung und/oder ein mineralisches Produkt.

Bevorzugt handelt es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt enthält die erfindungsgemäße Flammschutzmittel-Stabilisator-Kombination weiterhin sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthält die erfindungsgemäße Flammschutzmittel-Stabilisator-Kombination weiterhin Carbodiimide.

Die Erfindung betrifft auch eine Kunststoff-Formmasse, enthaltend 1 bis 50 Gew.-% an Komponente A, 0,01 bis 10 Gew.-% an Komponente B, 0 bis 30 Gew.-% an Komponente C, 0 bis 10 Gew.-% an Komponente D sowie 5 bis 98 Gew.-% Polyester oder Polyamid sowie ggf. übliche Hilfsstoffe und Additive, wobei die Summe der Gewichtskomponenten 100 Gew.-% ergibt.

Bevorzugt ist Kunststoff-Formmasse, enthaltend 3 bis 40 Gew.-% an Komponente A, 0,1 bis 5 Gew.-% an Komponente B, 0 bis 20 Gew.-% an Komponente C, 0 bis 7 Gew.-% an Komponente D sowie 40 bis 98 Gew.-% Polyester oder Polyamid sowie ggf. übliche Hilfsstoffe und Additive, wobei die Summe der Gewichtskomponenten 100 Gew.-% ergibt.

Besonders bevorzugt ist eine Kunststoff-Formmasse, enthaltend 5 bis 30 Gew.-% an Komponente A, 0,1 bis 3 Gew.-% an Komponente B, 0 bis 15 Gew.-% an Komponente C, 0 bis 5 Gew.-% an Komponente D sowie 60 bis 90 Gew.-% Polyester oder Polyamid sowie ggf. übliche Hilfsstoffe und Additive, wobei die Summe der Gewichtskomponenten 100 Gew.-% ergibt.

Als Komponente C für die die erfindungsgemäße Flammschutzmittel-Stabilisator-Kombination sind auch stickstoffhaltige Verbindungen, wie sie in WO 97/39053 sowie DE-A-197 34 437 und DE-A-197 37 727 und US 6,255,371 B1 beschrieben werden, geeignet.

Die Herstellung von Bis-N-acyllactam der Formel 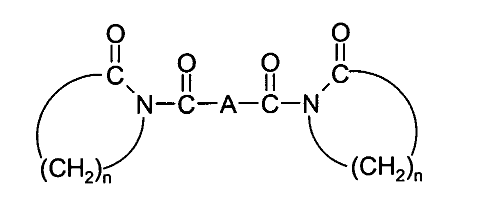 wobei A = Alkyl oder eine aromatische Gruppe und n = 3 bis 11 sind; ist in EP-A-0 288 253 beschrieben; Beispiele sind N, N'-isophthaloyl-bis-2-caprolactam, N,N'-adipoyl-bis-ε-caprolactam, N,N'-terephthaloyl-bis-laurolactam und N,N'-isophthaloyl-bisbutyrolactam

Die Herstellung von Carbonylbislactam der Formel 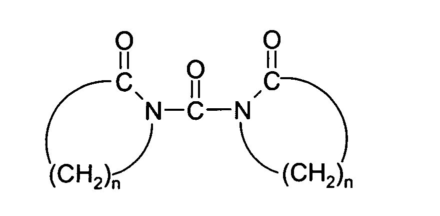 wobei n = 3 bis 15 ist; ist in WO 98/47940 beschrieben; als Beispiel sei N,N'-carbonylbiscaprolactam genannt;

Die Herstellung von Oxazolinen und Oxazinen ist in WO 96/34909 beschrieben. Hierzu gehören Bisoxazoline oder Bisoxazine der allgemeinen Formel 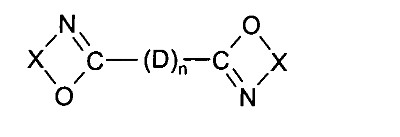 wobei X = eine bivalente Gruppe ist und wobei es sich um einen 5er-Ring oder 6er-Ring für Bisoxazoline bzw. Bisoxazine handelt. X ist zum Beispiel eine Ethylengruppe, eine substituierte Ethylengruppe, eine Trimethylen- oder eine substituierte Trimethylengruppe. Der Substituent kann eine Alkylgruppe mit 1 bis 10 C-Atomen, eine Arylgruppe, eine Cycloalkylgruppe oder eine Aralkylgruppe sein. Beispiele für Substituenten sind Methyl-, Ethyl-, Hexyl-, Alkylhexyl-, Nonyl-, Phenyl-, Naphthyl-, Diphenyl-, Cyclohexylgruppen etc.
D ist eine bivalente organische Gruppe, z. B. eine Alkylen-, Arylen-, Cycloalkylenund eine Aralkylengruppe. n ist 0 oder 1.
Beispiele für Bisoxazoline und Bisoxazine sind 2,2'-bis(2-oxazolin), 2,2'-bis(4-methyl-2-oxazolin), 2,2'-bis(4-phenyl-2-oxazolin), 2,2'-bis(4-hexyloxazolin), 2,2'-p oder m-phenylen-bis(2-oxazolin), 2,2'-tetramethylen-bis(4,4'-dimethyl-2-oxazolin) und entsprechende Oxazine.

Unter den geeigneten Epoxiden werden laut Ullmanns encyclopedia of industrial chemistry", ed. Barara Elvers, Vol. A9, Kapitel "Epoxides" (S. 531-545), VCH, Weinheim-Basel-Cambridge-New York 1992, Verbindungen verstanden, die durch folgende chemische Gruppe charakterisiert werden:

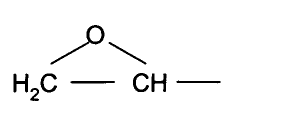

Bevorzugt sind funktionelle Epoxide, lineare und cyclische Diepoxide, und Polyepoxide.

Besonders bevorzugt handelt es sich bei der Komponente B um
b1) N,N'-terephthaloyl-bis-laurolactam, N,N'-isophthaloyl-bis-2-caprolactam, N,N'-carbonylbiscaprolactam
b2) 2,2'-bis(2-oxazoline), 2,2'-p-phenylen-bis(2-oxazolin), 2,2'-m-phenylen-bis(2-oxazolin) und entsprechende Oxazine
   und/oder
b3) Glycidylalkohole, Diglycidylether, epoxidierte Sojabohnenöle, Copolymere und Terpolymere mit Epoxidgruppen. Beispiele hierfür sind Ethylen-Glycidylmethacrylat-Copolymere, Styrol-Glycidylmethacrylat-Copolymere und Ethylen-Acrylsäureester-Glycidylmethyacrylat-Terpolymere.

Die Erfindung betrifft auch die Verwendung der erfindungsgemäßen Flammschutzmittel-Stabilisator-Kombination zur flammfesten Ausrüstung von Polyestern und Polyamiden. Polyester sind Polymere, die sich wiederholende, über eine Estergruppe verbundene Einheiten in der Polymerkette enthalten. Polyester, die erfindungsgemäß eingesetzt werden können, sind beispielsweise in "Ullmanns encyclopedia of industrial chemistry", ed. Barara Elvers, Vol. A21, Kapitel "Polyesters" (S. 227-251), VCH, Weinheim-Basel-Cambridge-New York 1992 beschrieben, worauf Bezug genommen wird. Auch Copolyester sind geeignet.

Polyamide sind Polymere, deren Eigenschaftsbild durch die Carbonamidgruppe CO-NH bestimmt wird. Geeignete teilkristalline oder amorphe Polyamide mit einem Molekulargewicht von mindestens 5000 werden z.B. in den US-Patenten 2071250, 2071251, 2130523, 2130948, 2241322, 2312966, 2512606 und 3393210 beschrieben. Auch Copolyamide sind geeignet.

Bevorzugt handelt es sich bei Polyester um Polyalkylenterephthalate mit 2 bis 10 C-Atomen im Alkoholanteil.

Bevorzugt handelt es sich bei Polyamiden um PA 6, PA 11, PA 12, PA 66 und PA 46. Sehr gut geeignet sind auch teilaromatische Polyamide.

Polyester und Polyamide, die die erfindungsgemäßen Flammschutzmittel-Stabilisator-Kombinationen und gegebenenfalls Füll- und Verstärkungsstoffe und/oder andere Zusätze, wie unten definiert, enthalten, werden im folgenden als Kunststoff-Formmassen bezeichnet.

Die Erfindung betrifft auch eine flammfest ausgerüstete Kunststoff-Formmasse, enthaltend die erfindungsgemäße Flammschutzmittel-Stabilisator-Kombination.

Bevorzugt handelt es sich bei dem Polymeren der flammfest ausgerüsteten Kunststoff-Formmasse um PA 6, PA 66, PA 11, PA 12, PA 46, PBT oder PET. Bei der Komponente B handelt es sich bevorzugt um
b1) N,N'-terephthaloyl-bis-laurolactam, N,N'-isophthaloyl-bis-2-caprolactam, N,N'-carbonylbiscaprolactam
b2) 2,2'-bis(2-oxazoline), 2,2'-p-phenylen-bis(2-oxazolin), 2,2'-m-phenylen-bis(2-oxazolin) und entsprechende Oxazine
   und/oder
b3) Glycidylalkohole, Diglycidylether, epoxidierte Sojabohnenöle, Copolymere und Terpolymere mit Epoxidgruppen. Beispiele hierfür sind Ethylen-Glycidylmethacrylat-Copolymere, Styrol-Glycidylmethacrylat-Copolymere und Ethylen-Acrylsäureester-Glycidylmethyacrylat-Terpolymere.

Im Folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methan-di(methylphosphinsäure), Benzol-1,4-(dimethylphosphinsäure), Methyl-phenyl-phosphinsäure, Diphenylphosphinsäure.

Die Salze der Phosphinsäuren gemäß der Erfindung können nach bekannten Methoden hergestellt werden, wie sie beispielsweise in der EP-A-699 708 näher beschrieben sind. Die Phosphinsäuren werden dabei beispielsweise in wässriger Lösung mit Metallcarbonaten, Metallhydroxiden oder Metalloxiden umgesetzt.

Die Menge des den Polymeren zuzusetzenden Phosphinsäuresalzes kann innerhalb weiter Grenzen variieren. Im Allgemeinen verwendet man 1 bis 50 Gew.-%, bezogen auf die Kunststoff-Formmasse. Die optimale Menge hängt von der Natur des Polymeren und der Art der Komponenten B und vom Typ des eingesetzten Phosphinsäuresalzes selbst ab. Bevorzugt sind 3 bis 40, insbesondere 5 bis 30 Gew.-%, bezogen auf die Kunststoff-Formmasse.

Die vorgenannten Phosphinsäuresalze können für die erfindungsgemäße Flammschutzmittel-Stabilisator-Kombination je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für Polyamide und Polyester nicht flüchtig.

Die Menge der den Polymeren zuzusetzenden erfindungsgemäßen Kettenverlängerern (Komponente B) kann innerhalb weiter Grenzen variieren. Im Allgemeinen verwendet man 0,01 bis 10 Gew.-%, bezogen auf die Kunststoff-Formmasse. Die optimale Menge hängt von der Natur des Polymeren, der Art des eingesetzten Phosphinsäuresalzes (Komponente A), der Art der eingesetzten Stickstoffverbindung (Komponente C) und der Art des eingesetzten Kettenverlängerers (Komponente B) ab. Bevorzugt sind 0,1 bis 5, insbesondere 0,1 bis 3 Gew.-%.

Die Menge der den Polymeren zuzusetzenden Stickstoffverbindung (Komponente C) kann innerhalb weiter Grenzen variieren. Im Allgemeinen verwendet man 0 bis 50 Gew.-%, bezogen auf die Kunststoff-Formmasse. Die optimale Menge hängt von der Natur des Polymeren und der Art des eingesetzten Phosphinsäuresalzes (Komponente A), der Art des eingesetzten Kettenverlängerers (Komponente B) und der Art der eingesetzten Stickstoffverbindung (Komponente C).

Die Komponenten A, B und C sowie D können in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten A, B und C sowie D können auch separat über eine Dosieranlage direkt in das Compoundieraggregat eingebracht werden.
Es ist ebenso möglich, die flammhemmenden und stabilisierenden Zusätze A, B und C sowie D einem fertigen Polymergranulat bzw. -pulver beizumischen und die Mischung direkt auf einer Spritzgussmaschine zu Formteilen zu verarbeiten.

Bei Polyestern beispielsweise können die flammhemmenden Zusätze A, B und C sowie D auch bereits während der Polykondensation in die Polyestermasse gegeben werden.

Den Formmassen können neben der erfindungsgemäßen Flammschutzmittel-Stabilisator-Kombination aus A, B und C sowie D auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel, Carbodiimide oder Antistatika enthalten. Beispiele für die verwendbaren Zusätze sind in EP-A-0 584 567 angegeben.
Die flammwidrigen Kunststoff-Formmassen eignen sich zur Herstellung von Formkörpern, Filmen, Fäden und Fasern, z. B. durch Spritzgießen, Extrudieren oder Verpressen.

### Beispiele

### 1. Eingesetzte Komponenten

Handelsübliche Polymere (Granulate):
Polybutylenterephthalat (PBT): ® Celanex 2002 (Fa. Ticona, D)

### Komponente A:

Aluminiumsalz der Diethylphosphinsäure, im Folgenden als DEPAL bezeichnet.

### Komponente B:

Allinco® (Carbonylbiscaprolactam), Fa. DSM, NL
Joncryl® ADR-4367, Fa. Johnson Polymer, USA
Lotader® AX 8840 (Ethylen-Glycidylmethacrylat-Copolymer), Fa. Atofina, F
Lotader® AX 8900 (Ethylen-Acrylsäureester-Glycidylmethacrylat-Terpolymer), Fa. Atofina, F

### Komponente C:

Melapur® MC (Melamincyanurat), Fa. Ciba Specialty Chemicals, CH

### Sonstige Zusätze:

Vetrotex EC 10 P 952 (Glasfasern), Fa. Vetrotex Reinforcement, D

### 2. Herstellung, Verarbeitung und Prüfung von flammhemmenden Kunststoff-Formmassen

Die Flammschutz- und Stabilisatorkomponenten wurden in dem in den Tabellen angegebenen Verhältnis mit dem Polymergranulat und evtl. Additiven vermischt und auf einem Doppelschneckenextruder (Typ Leistritz ZSE 27 HP-44D) bei Temperaturen von 240 bis 280°C (PBT) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320C/KT) bei Massetemperaturen von 260 bis 280°C (PBT) zu Prüfkörpern verarbeitet und anhand des UL 94-Tests (Underwriter Laboratories) auf Flammwidrigkeit geprüft und klassifiziert.

Die Verarbeitungseigenschaften der erfindungsgemäßen Kombinationen in Polyester wurden anhand der Spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Tabelle 1 zeigt Vergleichsbeispiele, in denen das Aluminiumsalz der Diethylphosphinsäure (Komponente A) als alleinige Flammschutzmittelkomponenten und in Kombination mit Melamincyanurat (Komponente C) in PBT geprüft wurden. Durch das Flammschutzmittel wird das Polymer abgebaut, was an den geringeren SV-Zahlen erkenntlich ist.

Die Ergebnisse der Beispiele, in denen die Flammschutzmittel-Stabilisator-Kombination gemäß der Erfindung eingesetzt wurden, sind in den Tabellen 2 und 3 aufgelistet. Alle Mengen sind als Gew.-% angegeben und beziehen sich auf die Kunststoff-Formmasse einschließlich der Flammschutzmittel-Stabilisator-Kombination.

Aus den Beispielen geht hervor, dass die erfindungsgemäßen Zusätze (Komponente B) in der Kombination mit Metallsalzen der Phosphinsäuren (Komponente A) und wahlweise mit Stickstoffverbindungen (Komponente C) eine eindeutige Stabilisierung der Flammschutz-Formmasse bewirken, ohne die Flammschutzwirkung zu beeinträchtigen. Schon mit geringen Mengen an Komponente B lassen sich SV-Zahlen erreichen, die so hoch sind wie die der nichtflammgeschützten Kunststoff-Formmassen.

Durch die erfindungsgemäße Flammschutzmittel-Stabilisator-Kombination lassen sich mit relativ geringen Mengen Flammschutzmitteln Kunststoff-Formmassen herstellen, die sich durch einen effektiven Flammschutz und gute mechanische Eigenschaften ausweisen.

**Tabelle 1:**

| Vergleichsbeispiele. Phosphinate (Komponente A) bzw. Melamincyanurat (Komponente C) in PBT. | | | | |
|---|---|---|---|---|
| DEPAL [%] | Melamincyanurat [%] | Glasfasern [%] | Klasse nach UL 94 (1,6 mm) | SV-Zahl |
| | | | V-2 | 1522 |
| | | 30 | n.k. | 1396 |
| 20 | | | V-0 | 883 |
| 10 | 10 | 30 | V-0 | 1063 |
| 13,3 | 6,7 | 30 | V-0 | 991 |
| ^{*)} n.k. = nicht klassifizierbar | | | | |

**Tabelle 2:**

| Erfindungsgemäß. Phosphinate (Komponente A) in Kombination mit Kettenverlängerern (Komponente B) in PBT. | | | | | | |
|---|---|---|---|---|---|---|
| DEPAL [%] | Allinco [%] | Joncryl ADR-4367 [%] | Lotader AX 8840 [%] | Lotader AX 8900 [%] | Klasse nach UL 94 (1,6 mm) | SV-Zahl |
| 20 | 0,3 | 1 | | | V-0 | 1360 |
| 20 | 0,5 | | | | V-0 | 10042 |
| 20 | | 0,5 | | | V-0 | 1846 |
| 20 | | 1 | | | V-0 | 3100 |
| 20 | | | 2 | | V-0 | 1275 |
| 20 | | | | 2 | V-0 | 1151 |

**Tabelle 3:**

| Erfindungsgemäß. Phosphinate (Komponente A) in Kombination mit Kettenverlängerern (Komponente B) und Melamincyanurat (Komponente C) in PBT. | | | | | | |
|---|---|---|---|---|---|---|
| DEPAL [%] | Melamincyanurat [%] | Joncryl ADR-4367 [%] | Allinco [%] | Glasfasern [%] | Klasse nach UL 94 (1,6 mm) | SV-Zahl |
| 10 | 10 | 0,2 | | 30 | V-0 | 1161 |
| 10 | 10 | 0,4 | | 30 | V-0 | 1377 |
| 13,3 | 6,7 | | 0,3 | 30 | V-0 | 1056 |

## Patentansprüche

1. Flammschutzmittel-Stabilisator-Kombination für thermoplastische Polymere, die als Komponente A ein Phosphinsäuresalz der Formel (I) und/oder ein Diphosphinsäuresalz der Formel (II) und/oder deren Polymere, 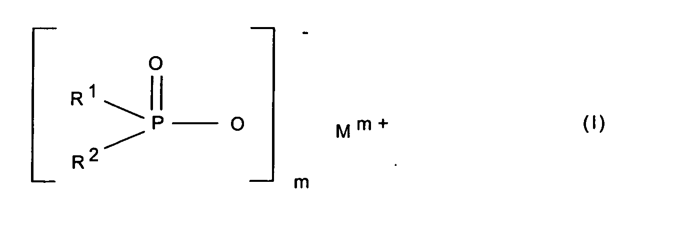 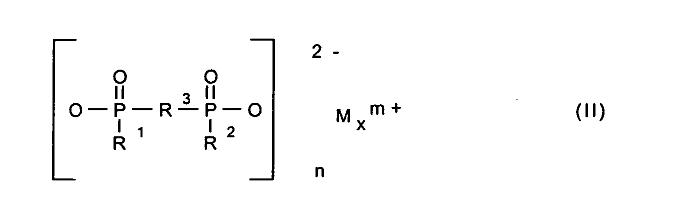 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Ce, Bi, Sr, Mn, Li, Na, K und/oder eine protonierte Stickstoffbase; bevorzugt Calcium-, Magnesium-, Aluminium - und/oder Zink-Ionen,
m 1 bis 4; n 1 bis 4; x 1 bis 4, bevorzugt m 2 oder 3; n 1 oder 3; x 1 oder 2 bedeuten
und als Komponente B mindestens einen Kettenverlängerer folgender Verbindungsklassen
b1) Bislactame,
b2) Bisoxazoline oder Bisoxazine und/oder
b3) Epoxiden,
b4) Anhydride mehrwertiger Carbonsäuren
enthält.

2. Flammschutzmittel-Stabilisator-Kombination nach Anspruch 1, **dadurch gekennzeichnet, dass** R¹, R² gleich oder verschieden sind und C₁-C₆-Alkyl, linear oder verzweigt und/oder Phenyl bedeuten.

3. Flammschutzmittel-Stabilisator-Kombination nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammschutzmittel-Stabilisator-Kombination nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

5. Flammschutzmittel-Stabilisator-Kombination nach einem oder mehreren der Ansprüche 1 bis 4, **dadurch gekennzeichnet, dass** es sich bei der Komponente B um Bis-N-acyllactame der Formel 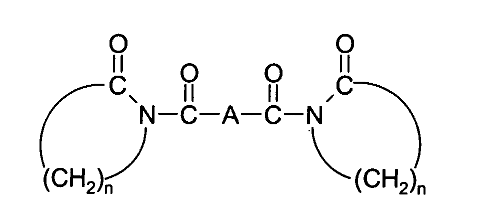 mit A = Alkyl oder eine aromatische Gruppe und n = 3 bis 11 handelt.

6. Flammschutzmittel-Stabilisator-Kombination nach einem oder mehreren der Ansprüche 1 bis 5, **dadurch gekennzeichnet, dass** es sich bei der Komponente B um N,N'-isophthaloyl-bis-2-caprolactam, N,N'-adipoyl-bis-ε-caprolactam, N,N'-terephthaloyl-bis-laurolactam oder N,N'-isophthaloyl-bisbutyrolactam handelt.

7. Flammschutzmittel-Stabilisator-Kombination nach einem oder mehreren der Ansprüche 1 bis 4, **dadurch gekennzeichnet, dass** es sich bei der Komponente B um Carbonylbislactame der Formel 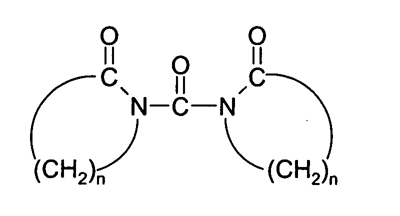 mit n = 3 bis 15 handelt, insbesondere um N,N'-carbonylbiscaprolactam.

8. Flammschutzmittel-Stabilisator-Kombination nach einem oder mehreren der Ansprüche 1 bis 4, **dadurch gekennzeichnet, dass** es sich bei der Komponente B um Bisoxazoline oder Bisoxazine der allgemeinen Formel 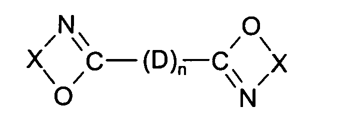 wobei X = eine bivalente Gruppe ist und wobei es sich bei X um einen 5er-Ring oder 6er-Ring für Bisoxazoline bzw. Bisoxazine handelt, und wobei D eine bivalente organische Gruppe, wie eine Alkylen-, Arylen-, Cycloalkylen- oder eine Aralkylengruppe und n 0 oder 1 ist.

9. Flammschutzmittel-Stabilisator-Kombination nach einem oder mehreren der Ansprüche 1 bis 4, **dadurch gekennzeichnet, dass** es sich bei den Anhydriden mehrwertiger Carbonsäuren um niedermolekulare Bisanhydride und/oder um mit Maleinsäureanhydrid gepfropfte Polymere handelt.

10. Flammschutzmittel-Stabilisator-Kombination nach einem oder mehreren der Ansprüche 1 bis 9, **dadurch gekennzeichnet, dass** es sich bei X um eine Ethylengruppe, eine substituierte Ethylengruppe, eine Trimethylen- oder eine substituierte Trimethylengruppe handelt.

11. Flammschutzmittel-Stabilisator-Kombination nach einem oder mehreren der Ansprüche 1 bis 10, **dadurch gekennzeichnet, dass** die Ethylengruppe und/oder Trimethylengruppe mit Methyl-, Ethyl-, Hexyl-, Alkylhexyl-, Nonyl-, Phenyl-, Naphthyl-, Diphenyl- oder Cyclohexylgruppen substituiert wurde.

12. Flammschutzmittel-Stabilisator-Kombination nach einem oder mehreren der Ansprüche 1 bis 11, **dadurch gekennzeichnet, dass** es sich bei den Bisoxazolinen und Bisoxazinen um 2,2'-bis(2-oxazolin), 2,2'-bis(4-methyl-2-oxazolin), 2,2'-bis(4-phenyl-2-oxazolin), 2,2'-bis(4-hexyloxazolin), 2,2'-p oder m-phenylen-bis(2-oxazolin), 2,2'-tetramethylen-bis(4,4'-dimethyl-2-oxazolin) und entsprechende Oxazine handelt.

13. Flammschutzmittel-Stabilisator-Kombination nach einem oder mehreren der Ansprüche 1 bis 12, **dadurch gekennzeichnet, dass** sie als weitere Komponente C Melaminphosphat, Dimelaminphosphat, Melaminpyrophosphat, Melaminpolyphosphate, Melampolyphosphate, Melempolyphosphate und/oder Melonpolyphosphate enthält.

14. Flammschutzmittel-Stabilisator-Kombination nach einem oder mehreren der Ansprüche 1 bis 13, **dadurch gekennzeichnet, dass** sie als weitere Komponente C Melaminkondensationsprodukte wie Melam, Melem und/oder Melon enthält.

15. Flammschutzmittel-Stabilisator-Kombination nach einem oder mehreren der Ansprüche 1 bis 14, **dadurch gekennzeichnet, dass** sie als weitere Komponente C oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin enthalten.

16. Flammschutzmittel-Stabilisator-Kombination nach einem oder mehreren der Ansprüche 1 bis 15, **dadurch gekennzeichnet, dass** sie als weitere Komponente C stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, enthält.

17. Flammschutzmittel-Stabilisator-Kombination nach einem oder mehreren der Ansprüche 1 bis 16, **dadurch gekennzeichnet, dass** als weitere Komponente C Stickstoffverbindungen der Formeln (III) bis (VIII) oder Gemische davon 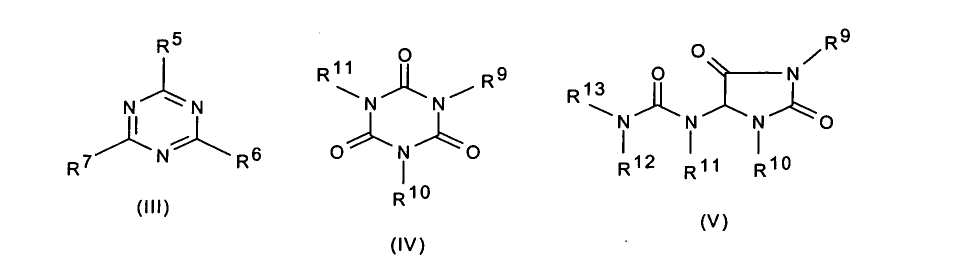 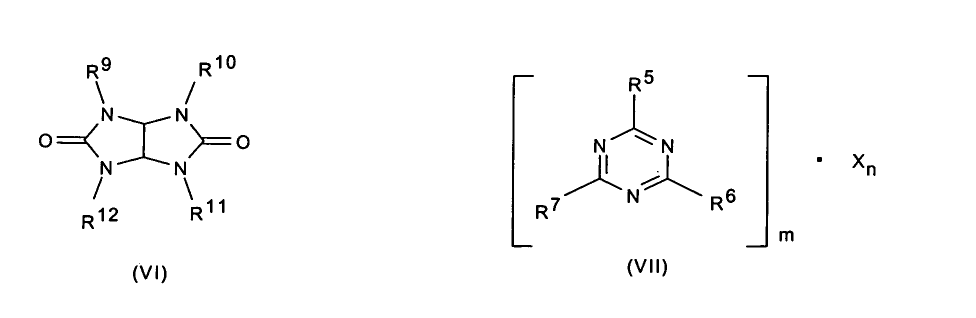 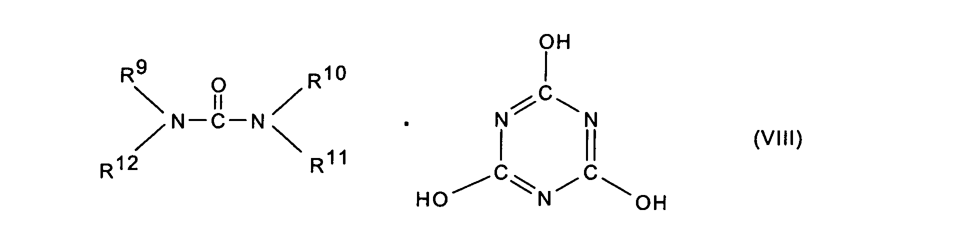 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten,
enthalten sind.

18. Flammschutzmittel-Stabilisator-Kombination nach einem oder mehreren der Ansprüche 1 bis 17, **dadurch gekennzeichnet, dass** sie weiterhin als Komponente D eine synthetische anorganische Verbindung und/oder ein mineralisches Produkt enthält.

19. Flammschutzmittel-Stabilisator-Kombination nach einem oder mehreren der Ansprüche 1 bis 18, **dadurch gekennzeichnet, dass** es sich bei der Komponente D um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

20. Flammschutzmittel-Stabilisator-Kombination nach einem oder mehreren der Ansprüche 1 bis 19, **dadurch gekennzeichnet, dass** sie weiterhin sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat handelt.

21. Flammschutzmittel-Stabilisator-Kombination nach einem oder mehreren der Ansprüche 1 bis 20, **dadurch gekennzeichnet, dass** sie weiterhin Carbodiimide enthält.

22. Kunststoff-Formmasse, enthaltend 1 bis 50 Gew.-% an Komponente A, 0,01 bis 10 Gew.-% an Komponente B, 0 bis 30 Gew.-% an Komponente C, 0 bis 10 Gew.-% an Komponente D sowie 5 bis 98 Gew.-% Polyester oder Polyamid sowie ggf. übliche Hilfsstoffe und Additive, wobei die Summe der Gewichtskomponenten 100 Gew.-% ergibt.

23. Kunststoff-Formmasse, enthaltend 3 bis 40 Gew.-% an Komponente A, 0,1 bis 5 Gew.-% an Komponente B, 0 bis 20 Gew.-% an Komponente C, 0 bis 7 Gew.-% an Komponente D sowie 40 bis 98 Gew.-% Polyester oder Polyamid sowie ggf. übliche Hilfsstoffe und Additive, wobei die Summe der Gewichtskomponenten 100 Gew.-% ergibt.

24. Kunststoff-Formmasse, enthaltend 5 bis 30 Gew.-% an Komponente A, 0,1 bis 3 Gew.-% an Komponente B, 0 bis 15 Gew.-% an Komponente C, 0 bis 5 Gew.-% an Komponente D sowie 60 bis 90 Gew.-% Polyester oder Polyamid sowie ggf. übliche Hilfsstoffe und Additive, wobei die Summe der Gewichtskomponenten 100 Gew.-% ergibt.
